# EUROPEAN PATENT APPLICATION

(11) **EP 3 287 936 A2**
(43) Date of publication of application: **28.02.2018**
(21) Application number: 17184761.9
(22) Date of filing: 03.08.2017
(51) Int. Cl.: G06K 7/10, G07G 1/00

(54) **TAG READING DEVICE AND CONTROL PROGRAM FOR TAG READING DEVICE**

(30) Priority: 05.08.2016 JP 2016154530
(71) Applicant: Toshiba TEC Kabushiki Kaisha, Tokyo 141-8562 (JP)
(72) Inventor: SUZUKI, Shigeaki, Shinagawa-ku,, Tokyo 141-8562 (JP)
(74) Representative: Takeuchi, Maya

(57) **Abstract**

An electronic tag reading device includes an antenna for transmitting wireless signals to an electronic tag to initiate reading of information stored in the electronic tag. An electronic tag reader is electrically coupled to the antenna to supply signals to the antenna and receive signals from the antenna that are used in reading the information stored in the electronic tag. A moveable stage is configured to move the antenna during a reading process for reading the information from the electronic tag. A speed controller is configured to change a speed of the moveable stage during the reading process.

## Description

### FIELD

Embodiments described herein relate generally to a tag reading device and a control program for a tag reading device.

### BACKGROUND

In the related art, a wireless tag reading device reads information from a radio frequency identification (RFID) tag using an RFID reader with a moving antenna. The RFID tags can be attached to items of merchandise for tracking and inventory control.

In an existing wireless tag reading device, if the antenna moves at a high speed, the power supply to the RFID tags from the antenna can be intermittently interrupted, and thus certain RFID tags may be missed. However, if the antenna moves at a low speed in such a device, there can be a problem in that it may consume substantial time to move the antenna throughout the entire targeted reading area.

### BRIEF DESCRIPTION OF THE DRAWINGS

Fig. 1 is an external perspective view of an RFID tag reading device according to an embodiment and a merchandise sales data processing apparatus.
Fig. 2 is a side view illustrating a schematic configuration of the RFID tag reading device.
Fig. 3 is a block diagram illustrating hardware aspects of a merchandise sales data processing apparatus and a RFID tag reading device.
Fig. 4 is a block diagram illustrating functional aspects of a merchandise sales data processing apparatus and a RFID tag reading device.
Fig. 5 is a diagram illustrating a setting example of a speed change pattern for moving an RFID antenna.
Fig. 6 is a flowchart illustrating aspects of an RFID tag reading process that can be performed by a merchandise sales data processing apparatus and a RFID tag reading device.
Fig. 7 is a diagram illustrating a different setting example of a speed change pattern for moving a RFID antenna.
Fig. 8 is a flowchart illustrating aspects of an RFID tag reading process that can be performed by a modification of a RFID tag reading device.
Figs. 9A to 9C are diagrams illustrating a different example of the RFID tag reading device; Fig. 9A is a top view illustrating a schematic configuration of the RFID tag reading device; Fig. 9B is a diagram illustrating an example of a movement of the RFID antenna; and Fig. 9C is a diagram illustrating a different example of the movement of the RFID antenna.

### DETAILED DESCRIPTION

To solve the above-cited problems, there is provided to an electronic tag reading device, comprising: an antenna for transmitting wireless signals to an electronic tag to initiate reading of information stored in the electronic tag; an electronic tag reader electrically coupled to the antenna to supply signals to the antenna and receive signals from the antenna that are used in reading the information stored in the electronic tag; a moveable stage connected to the antenna and configured to move the antenna during a reading process for reading the information from the electronic tag; and a speed controller configured to change a speed of the moveable stage during the reading process.

Preferably, the speed of the moveable stage is based on at least one of a movement distance of the moveable stage, a position of the moveable stage along a movement range of the moveable stage, and a reading result of the electronic tag reader.

Preferably, the speed of the moveable stage is reduced when the moveable stage has moved a predetermined movement distance during the reading process.

Preferably, the speed of the moveable stage is reduced when the moveable stage traverses a center portion of a predetermined movement range of the moveable stage during the reading process.

Preferably, the speed of the moveable stage is reduced when the electronic tag reader fails to read information from an electronic tag during the reading process.

Preferably, the electronic tag is a radio frequency identification (RFID) tag, the antenna is a planar patch antenna, and the moveable stage includes a coaxial connector to which the electronic tag reader is connected.

Preferably, the moveable stage is configured to move the antenna along a fixed path during the reading process.

Preferably, the movement unit is configured to move the antenna along a two-dimensional path during the reading process.

The electronic tag reading device may further comprise: a checkout counter upon which an item of merchandise, to which the electronic tag has been attached, can be placed, wherein the antenna and the moveable stage are disposed underneath the checkout counter.

The electronic tag reading device may further comprise: a point-of-sale terminal disposed on the checkout counter and configured to receive electronic tag information from electronic tag reader during a sales registration process.

The present invention further relates to a sales data processing apparatus, comprising: an electronic tag reading area in which an item of merchandise can be placed; an antenna for transmitting wireless signals to the electronic tag reading area to initiate reading of information stored in an electronic tag attached to the item of merchandise; an electronic tag reader electrically coupled to the antenna to supply signals to the antenna and receive signals from the antenna that are used in reading the information stored in the electronic tag; a moveable stage connected to the antenna and configured to move the antenna during a reading process for reading the information from the electronic tag; a speed controller configured to change a movement speed of the moveable stage during the reading process; and a point-of-sale (POS) terminal connected to the electronic tag reader and configured to receive information read from the electronic tag during the reading process.

Preferably, the movement speed of the moveable stage is determined based on at least one of a cumulative movement distance of the moveable stage during the reading process, a position of moveable stage along a movement range of the movement stage, and a reading result of the electronic tag reader during the reading process.

Preferably, the movement speed of the moveable stage is reduced after the moveable stage has moved for a predetermined movement distance during the reading process.

Preferably, the movement speed of the moveable stage is reduced when moveable stage traverses a middle portion of a predetermined movement range during the reading process.

Preferably, the movement speed of the moveable stage is reduced when the electronic tag reader fails to read information from an electronic tag during the reading process.

Preferably, the electronic tag is a radio frequency identification (RFID) tag, the antenna is a planar patch antenna, and the moveable stage includes a coaxial connector at which the electronic tag reader is connected.

Preferably, the moveable stage is configured to move the antenna along a one-dimensional path during the reading process.

Preferably, the moveable stage is configured to move the antenna along a two-dimensional path during the reading process.

The present invention further relates to a non-transitory computer readable medium storing program instructions that when executed by an electronic tag reading device causes: an antenna to transmit wireless signals to an electronic tag to initiate reading of information stored in the electronic tag; an electronic tag reader electrically coupled to the antenna to supply signals to the antenna and receive signals from the antenna during a reading process; and a moveable stage connected to the antenna to move the antenna along a predetermined path during the reading process at a first speed and then a second speed different from the first speed.

Preferably, the change from the first speed to the second speed is set based on at least one of a cumulative movement distance of the moveable stage during the reading process, a position of the moveable stage along the predetermined path during the reading process, and a reading result from the electronic tag reader during the reading process.

In general, according to one embodiment, an electronic tag reading device comprises an antenna for transmitting wireless signals to an electronic tag (e.g., an RFID tag) to initiate reading of information stored in the electronic tag. An electronic tag reader is electrically coupled to the antenna. The electronic tag reader supplies signals to the antenna and receives signals from the antenna that are used in reading the information stored in the electronic tag. A moveable stage is connected to the antenna and is configured to move the antenna during a reading process for reading the information from the electronic tag. A speed controller is configured to change a speed of moveable stage during the reading process.

### (Description of overall configuration of merchandise sales data processing apparatus)

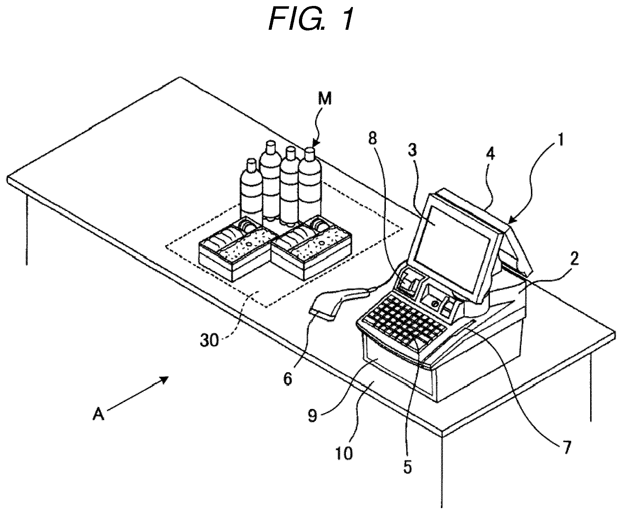

An RFID tag reading device according to an example embodiment will be described below with reference to the drawings. Fig. 1 is an external view illustrating an overall configuration of a merchandise sales data processing apparatus 1 equipped with an RFID tag reading device 30. The merchandise sales data processing apparatus 1 is installed, for example, in a store such as a supermarket, and used for registration of merchandise purchased by customers and the settlement process thereof. The RFID tag reading device 30 reads the information of an RFID tag attached to merchandise by using radio waves.

As illustrated in Fig. 1, the merchandise sales data processing apparatus 1 includes a Point-of-sale (POS) terminal body 2, a sales person-side display 3, a customer-side display 4, a keyboard 5, a barcode reader 6, a card reader 7, a receipt printer 8, and a drawer 9. The merchandise sales data processing apparatus 1 is also connected to the RFID tag reading device 30. The configuration of the RFID tag reading device 30 will be described later.

The POS terminal body 2 includes the sales person-side display 3, the customer-side display 4, the keyboard 5, the barcode reader 6, the card reader 7, the receipt printer 8, and the drawer 9. Although not illustrated in detail, the POS terminal body 2 is connected to a store controller (e.g., server) including a merchandise database, and can acquire merchandise information such as a merchandise name, a merchandise image, and a merchandise unit price corresponding to the merchandise code of each item of merchandise read.

The sales person-side display 3 is attached to the upper portion of the POS terminal body 2 towards the inside (the sales person side) of a checkout counter 10. The sales person-side display 3 displays information such as the name and price of the merchandise corresponding to a merchandise code read from a RFID tag attached to an item of merchandise. The sales person-side display 3 may have a function of a touch panel that recognizes an instruction input by a sales person's pressing of keys or buttons.

The customer-side display 4 is attached toward the outside of the checkout counter 10 (the customer side) with the back surface thereof facing the sales-person side display 3.

The keyboard 5 includes keys such as a closing key for declaring the end of a merchandise sales data processing of a merchandise M purchased by the customer.

The barcode reader 6 optically reads the barcode attached to each item of merchandise M, and is disposed so as to be usable at the center portion of the checkout counter 10. The barcode includes information such as a merchandise code which has been previously allocated to each item of merchandise for identifying the type of each item of merchandise. Either of a RFID tag T or a barcode can be affixed to each item of merchandise. Hereinafter, the RFID tag reading device 30 will be described. The description of the barcode reading process by the barcode reader 6 will be omitted.

The card reader 7 reads information on a points card (e.g., a customer loyalty card) or a credit card of a customer inserted from a card insertion slot not illustrated in Fig. 1.

The receipt printer 8 prints a receipt after an accounting process, and issues the receipt from a receipt issue opening not illustrated in Fig. 1.

The drawer 9 includes a drawer capable of opening and closing, and accommodates cash or the like in the drawer.

### (Description of overall configuration of RFID tag reading device)

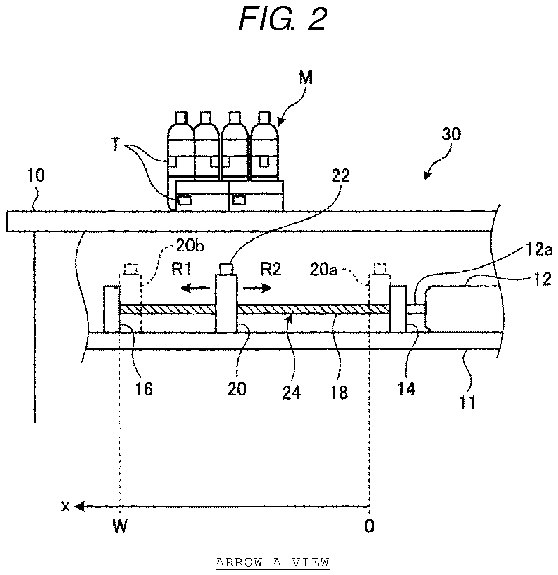

Next, the configuration of the RFID tag reading device 30 will be described. Fig. 2 is a side view illustrating a schematic configuration of the RFID tag reading device 30 (along the A arrow of Fig. 1).

The RFID tag reading device 30 reads an RFID tag attached to the merchandise M, particularly, an RFID tag T operating in the UHF band, in this example. The RFID tag reading device 30 includes an RFID antenna 22 (e.g., as part of an antenna unit). As illustrated in Fig. 2, the RFID antenna 22 is embedded in the checkout counter 10.

In Fig. 2, the RFID antenna 22 radiates radio waves toward a top plate of the checkout counter 10. The top plate is made of a material that transmits radio waves, such as wood. A communication area of the RFID tag reading device 30 corresponds to region/area that can receive radio waves transmitted by the RFID antenna 22. The RFID antenna 22 reads the tag information stored in the RFID tags T attached to the items of merchandise M placed in the reading area. As illustrated in Fig. 1, the item of merchandise M being purchased by the customer is placed directly on the checkout counter 10 above the RFID antenna 22. Alternatively, a shopping basket (not specifically depicted) containing the item of merchandise M may be placed above the RFID antenna 22. In addition, information, such as the merchandise code of the item of merchandise to which the RFID tag T is attached, is stored in the RFID tag T in advance along with identification information unique to the tag.

The RFID antenna 22 is installed on a moving mechanism 24 disposed under the checkout counter 10. The RFID antenna 22 so installed is thus movable below the top plate of the checkout counter 10.

The moving mechanism 24 is configured with a linear motion mechanism including a screw shaft 18, a bearing 16 of the screw shaft 18, a stepping motor 12, a coupling 14, and a moveable stage 20. The stepping motor 12 is a rotational power source. The coupling 14 transmits the rotational power of the stepping motor 12 to the screw shaft 18. The moveable stage 20 is formed integrally with a ball screw nut screwed to the screw shaft 18.

One end of the screw shaft 18 is horizontally supported by the bearing 16 and the other end by the coupling 14 so as to be rotatable about a horizontal axis (x-axis in Fig. 2). An output shaft 12a of the stepping motor 12 is connected to the other end of the screw shaft 18 in the coupling 14. With this configuration, the rotational power of the stepping motor 12 is transmitted from the output shaft 12a to the screw shaft 18 through the coupling 14.

The moveable stage 20 has a through hole, and the ball screw nut of the screw shaft 18 is embedded in the through hole. The moveable stage 20 moves forward and backward along the screw shaft 18, that is, moves in the directions of the arrow R1 and the arrow R2 along the x axis in Fig. 2. Since a metallic ball (e.g., steel ball) is interposed in the threaded portion between the screw shaft 18 and the ball screw nut during the movement of the moveable stage 20, smooth movement is possible. It is assumed that the moveable stage 20 moves in the range of x = 0 to x = W along the x axis as illustrated in Fig. 2. That is, the moveable stage 20 moves between the rightmost position 20a and the leftmost position 20b.

As described above, the moving mechanism 24 changes the rotational motion of the stepping motor 12 to a linear motion by the above-described ball screw mechanism to enable the moveable stage 20 to move forward and backward. The moveable stage 20 slides while keeping a part of the moveable stage 20 in contact with the support plate 11 such that the moveable stage 20 does not rotate as the screw shaft 18 rotates. Thus, the moveable stage 20 moves without rotating.

On the upper surface of the moveable stage 20, the RFID antenna 22 is fixed so that a reading surface of the RFID antenna 22 is facing the top plate of the checkout counter 10. Here, the reading surface of the RFID antenna 22 refers to a radiation surface from which a planar patch antenna radiates radio waves. With this disposition, the RFID antenna 22 radiates radio waves toward the reading surface, that is, toward the top plate of the checkout counter 10. Then, the RFID antenna 22 moves along the screw shaft 18 integrally with the moveable stage 20.

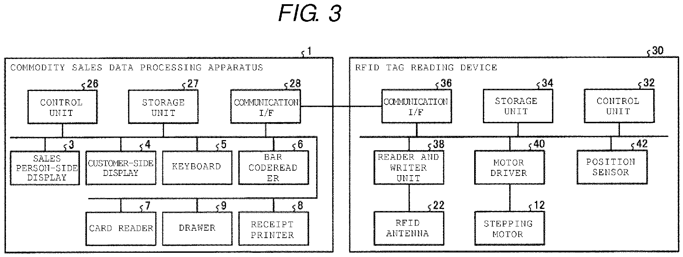

A reader and writer device (not illustrated) can be connected to the RFID antenna 22 using a bendable coaxial connector (e.g., coaxial cable). To improve the positioning accuracy of the moveable stage 20, the reader and writer device may be provided with a position sensor 42 (see Fig. 3) disposed along the path of the moveable stage 20. The position sensor 42 can be used to correct the position of the moveable stage 20. For example, the reader and writer device is provided with a position sensor 42 (for example, a micro switch, a proximity sensor, or the like) at a start position and an end position of the moveable stage 20, and acts to stop the movement of the moveable stage 20 or corrects the movement amount of the moveable stage 20 when the position sensor 42 detects the position of the moveable stage 20 is incorrect. Thus, the reader and writer device can more reliably perform positioning of the moveable stage 20 and therefore positioning of the RFID antenna 22.

With the configuration of the moving mechanism 24 described above, if the stepping motor 12 is rotated in one direction, the moveable stage 20 advances on the screw shaft 18 in the direction of the arrow R2 in Fig. 2, and if the stepping motor 12 rotates in the reverse direction, the moveable stage 20 moves on the screw shaft 18 in the direction of the arrow R1 in Fig. 2. Along with the movement of the moveable stage 20, the RFID antenna 22 moves integrally with the moveable stage 20, with the reading surface facing upward (towards the top plate of the checkout counter 10). With this movement, the RFID antenna 22 communicates with the RFID tag T while changing a communication range (distance) between the RFID tag T and the RFID antenna 22. Hereinafter, regarding the direction of rotation of the stepping motor 12, a case where the moveable stage 20 advances in the direction of the arrow R1 is defined as forward rotation, and a case where the moveable stage 20 advances in the direction of the arrow R2 is defined as reverse rotation.

### (Description of hardware configuration of an example)

Next, the hardware configurations of the merchandise sales data processing apparatus 1 and the RFID tag reading device 30 will be described. Fig. 3 is a hardware block diagram illustrating aspects of hardware configurations of the merchandise sales data processing apparatus 1 and the RFID tag reading device 30 in the present embodiment.

The merchandise sales data processing apparatus 1 includes a control unit 26 such as a computer including a central processing unit (CPU), a read only memory (ROM), a random access memory (RAM), and the like. The ROM stores various programs executed by the CPU and various types of data. The RAM temporarily stores data and programs when the CPU executes various programs.

The control unit 26 is connected to the sales person-side display 3, the customer-side display 4, the keyboard 5, the barcode reader 6, the card reader 7, the drawer 9 and the receipt printer 8 through various input and output circuits (I/O). The function of each hardware unit is as described above.

Furthermore, a storage unit 27 and a communication interface (I/F) 28 are connected to the control unit 26.

The storage unit 27 is a storage device including a nonvolatile storage medium such as a hard disk drive (HDD) or a solid state drive (SSD). The storage unit 27 stores various programs and various types of data related to the operation of the merchandise sales data processing apparatus 1. Examples of the data stored in the storage unit 27 include a merchandise master list registering merchandise information on each possible item of merchandise in association with a merchandise code identifying the merchandise. Such merchandise information includes, for example, the merchandise name, the price, and the like of the corresponding merchandise. The communication interface (I/F) 28 is an interface for transmitting and receiving various data to and from the RFID tag reading device 30.

The RFID tag reading device 30 includes a control unit 32 such as a computer including a CPU, a ROM, a RAM, and the like. The ROM stores various programs executed by the CPU and various types of data. The RAM temporarily stores data and programs when the CPU executes various programs.

Furthermore, the control unit 32 is connected to a reader and writer unit 38, a storage unit 34, a communication interface (I/F) 36, a motor driver 40, a position sensor 42, and the like through various input and output circuits.

The reader and writer unit 38 communicates with the RFID tag T through the RFID antenna 22 under the instruction from the control unit 32. The communication with the RFID tag T is generally performed as in the following example.

If the RFID tag T, for example, is a passive type that does not have a battery, the RFID antenna 22 amplifies unmodulated carrier waves supplied from the reader and writer unit 38 and radiates the carrier waves as radio waves. Then, in response to the interrogation radio waves, the RFID antenna 22 receives a response signal including tag information, such as an identification code, modulated (e.g., encoded) in the reflected radio wave, from the RFID tag T existing within the response range of the RFDI tag reading device. The RFID antenna 22 sends the received radio waves to the reader and writer unit 38, and the reader and writer unit 38 demodulates (e.g., decode) the received the carrier wave, and then transmits the demodulated tag information to the control unit 32. Thus, the tag information stored in the RFID tag T can be read with the RFID antenna 22.

The storage unit 34 is a storage device including a nonvolatile storage medium such as an HDD or an SSD. The storage unit 34 stores various programs and various types of data related to the operation of the RFID tag reading device 30. The communication interface (I/F) 36 is an interface for transmitting and receiving various types of data to and from the merchandise sales data processing apparatus 1.

The motor driver 40 is a driver circuit that operates the stepping motor 12. The motor driver 40 outputs a pulse signal for rotating the stepping motor 12 by a predetermined angle (e.g., step angle) based on an instruction from the control unit 32.

The position sensor 42 detects whether or not the moveable stage 20 is at a predetermined position, as described above.

### (Description of functional configuration)

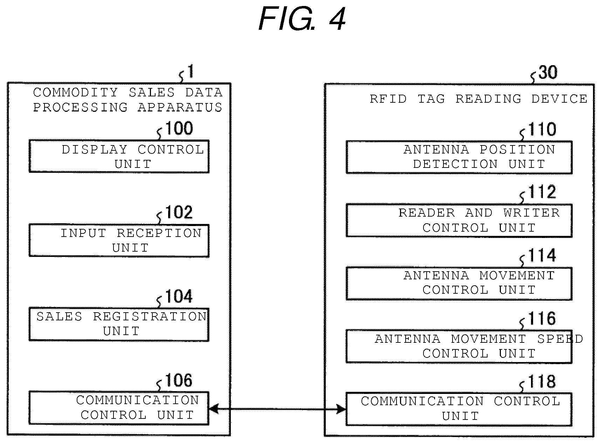

Next, the functional aspects of configurations of the merchandise sales data processing apparatus 1 and the RFID tag reading device 30 will be described. Fig. 4 is a block diagram illustrating functional aspects of the merchandise sales data processing apparatus 1 and the RFID tag reading device 30.

The control unit 26 (CPU) of the merchandise sales data processing apparatus 1 cooperates with a program stored in the storage unit 27 to realize the display control unit 100, the input reception unit 102, the sales registration unit 104, and the communication control unit 106 as functional units.

The display control unit 100 controls the sales person-side display 3 so as to display various screens on the sales person-side display 3. For example, the display control unit 100 displays a screen including a button, an icon, or the like for instructing the start of the reading of the merchandise code (the RFID tag T) (also referred to as a reading start button) and a button, an icon, or the like for instructing the end of the reading (also referred to as a reading end button). Further, the display control unit 100 reads the merchandise information corresponding to the merchandise code from the merchandise master list, based on the merchandise code transmitted from the RFID tag reading device 30, and displays the merchandise name and price of the merchandise M, the tendered amount, the change due amount, and the like on the sales person-side display 3. Further, the display control unit 100 controls the customer-side display 4 so as to display various screens on the customer-side display 4. For example, the display control unit 100 displays the merchandise name, the price, and the like of the item of merchandise M being purchased by the customer on both the sales person-side display 3 and the customer-side display 4, based on the merchandise code transmitted from the RFID tag reading device 30.

The input reception unit 102 receives an input through the keyboard 5 or the touch panel. For example, if a button or key is pressed on the operation screen displayed on the sales person-side display 3, the input reception unit 102 outputs an instruction corresponding to the pressed button or key to the control unit 26.

When the payment is confirmed upon settlement process for each item of merchandise corresponding to the merchandise codes transmitted from the RFID tag reading device 30, the sales registration unit 104 registers the sales of the item of merchandise purchased by the customer. Specifically, the sales registration unit 104 registers the merchandise code of each item of merchandise in the database for registration together with the tendered amount, change due, and transaction date and time. The database for registration may be provided in the storage unit 27 of the merchandise sales data processing apparatus 1 or may be provided in an external device capable of communicating with the merchandise sales data processing apparatus 1.

The communication control unit 106 controls the communication interface (I/F) 28, and transmits and receives various types of information to and from the RFID tag reading device 30 through the communication interface (I/F) 28. For example, if the reading start button is pressed, the communication control unit 106 transmits instruction information for instructing the start of the reading to the RFID tag reading device 30. Furthermore, the communication control unit 106 receives the merchandise code transmitted from the RFID tag reading device 30. If the reading end button is pressed, the communication control unit 106 transmits instruction information for instructing the end of the reading to the RFID tag reading device 30.

The control unit 32 (CPU) of the RFID tag reading device 30 cooperates with the program stored in the storage unit 34 to realize an antenna position detection unit 110, a reader and writer control unit 112, an antenna movement control unit 114, an antenna movement speed control unit 116, and a communication control unit 118 as functional units.

The reader and writer control unit 112 controls the reader and writer unit 38 so as to perform reading of the RFID tags T (attached to the items of merchandise) and performs writing to the RFID tags T through the RFID antenna 22.

Specifically, the reader and writer control unit 112 starts a reading cycle for reading the RFID tag T, when the start of reading is instructed from the merchandise sales data processing apparatus 1. The tag information read from the RFID tag T is transmitted to the merchandise sales data processing apparatus 1 from the reader and writer control unit 112 at any time during or after the reading.

Further, when the end of reading is instructed from the merchandise sales data processing apparatus 1, the reader and writer control unit 112 ends the reading by the reader and writer unit 38. Then, when a registration completion is instructed from the merchandise sales data processing apparatus 1, the reader and writer control unit 112 controls the reader and writer unit 38 and performs a writing (writing cycle) of the registration completion flag. Here, the registration completion flag is information indicating that the sales registration has been completed for the particular RFID tag(s) T. The completion flag is written to a predetermined storage area of each RFID tag T.

The antenna position detection unit 110 receives an instruction from the control unit 32 and monitors the output of the position sensor 42. Then, is the antenna position detection unit 110 determines whether or not the moveable stage 20 is at a predetermined position. The antenna position detection unit 110 further passes the output of the position sensor 42 to the control unit 32.

The antenna movement control unit 114 controls the motor driver 40 when reading the RFID tag T. Specifically, during the execution of reading of the RFID tag T by the reader and writer control unit 112, the antenna movement control unit 114 drives the motor driver 40 according to a predetermined operation pattern. Specifically, the antenna movement control unit 114 acquires information on the position of the moveable stage 20 detected by the antenna position detection unit 110, and moves the moveable stage 20 according to the predetermined operation pattern. For example, the predetermined operation pattern may be reciprocating the moveable stage 20 between positions x = 0 and x = W (see FIG. 2).

The antenna movement speed control unit 116 performs control to change the movement speed of the RFID antenna 22, when the antenna movement control unit 114 controls the motor driver 40. Specifically, when the moveable stage 20 (on which RFID antenna 22 is supported/attached) is moved, the movement speed of the RFID antenna 22 is changed according to the number of round trips (movement cycles) of the moveable stage 20. Further, the movement speed of the RFID antenna 22 is changed according to the position of the moveable stage 20 (or RFID antenna 22). A specific pattern of changing movement speed will be described later. The movement speed of the RFID antenna 22 is changed by changing the frequency of the pulse signal applied to the stepping motor 12. That is, if the frequency of the pulse signal applied to the stepping motor 12 is increased, the movement speed of the RFID antenna 22 increases. Conversely, if the frequency of the pulse signal applied to the stepping motor 12 is decreased, the movement speed of the RFID antenna 22 decreases. The specific frequency of a pulse signal is determined by referring to the relationship between the frequency of the pulse signal, acquired in advance, and the movement speed of the RFID antenna 22.

The communication control unit 118 controls the communication interface (I/F) 36, and transmits and receives various types of information to and from the merchandise sales data processing apparatus 1 through the communication interface (I/F) 36. For example, the communication control unit 118 receives the instruction information for instructing to start reading which is transmitted from the merchandise sales data processing apparatus 1. Further, the communication control unit 118 transmits the merchandise code read from the RFID tag T by the reader and writer control unit 112, to the merchandise sales data processing apparatus 1. In addition, the communication control unit 118 receives the instruction information for instructing to end reading which is transmitted from the merchandise sales data processing apparatus 1.

### (Description of speed change pattern of RFID antenna)

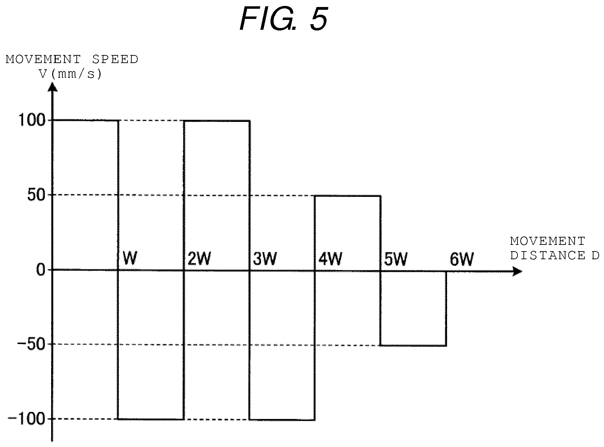

Next, a specific speed change pattern of the RFID antenna 22 in the RFID tag reading device 30 will be described. Fig. 5 is a diagram illustrating a setting example of a movement speed when moving the RFID antenna 22.

As described above, the RFID antenna 22 receives tag information such as an identification code modulated (e.g., encoded) in the reflected radio wave, from the RFID tag T existing within the response range of the RFDI tag reading device. Therefore, if the RFID antenna 22 moves at a high speed, the power supply to the RFID tags T from the RFID antenna 22 is intermittently interrupted. Therefore, reflected waves from certain RFID tags T may not be obtained.

Conversely, if the RFID antenna 22 moves at a low speed, the RFID antenna 22 can also supply power to the RFID tags T overlapping one another. Therefore, reflected waves from the overlapping RFID tags T can reliably be obtained. However, since the movement speed of the RFID antenna 22 is low, the reading time increases.

Therefore, the RFID tag reading device 30 according to the present embodiment changes the movement speed of the RFID antenna 22, according to the number of round trips (corresponding to a total movement distance D) of the RFID antenna 22.

Specifically, as illustrated in Fig. 5, when the RFID antenna 22 is moved, the RFID antenna 22 is moved at a high speed (for example, 100 mm/s) in the first two round trips (0 ≤ D ≤ 4W). The RFID antenna 22 is moved at a low speed (for example, 50 mm/s) in the next one round trip (4W ≤ D ≤ 6W).

The RFID antenna 22 moves at a high speed during the first two round trips so as to receive tag information from the RFID tags T, from which reflected waves can be obtained with a short time power supply, among the RFID tags T attached to the items of merchandise M. Then, the RFID antenna 22 moves at a lower speed during the next round trip so as to supply power to the RFID tags T for a longer time. Thus, tag information is received from the RFID tags T that have smaller reading areas of the RFID tag reading device 30, for example, the RFID tags T overlapping one another. Therefore, in the third round trip, the RFID antenna 22 receives the tag information that could not be received during the first two round trips.

For example, in Fig. 2, the movement range of the RFID antenna 22 is W = 200 mm, if the RFID antenna 22 is moved with a movement speed V, as depicted in Fig. 5, the RFID antenna 22 reads the tag information during a total reading time of 16 seconds: 4 seconds per round trip for the first two round trips and 8 seconds for the third round trip.

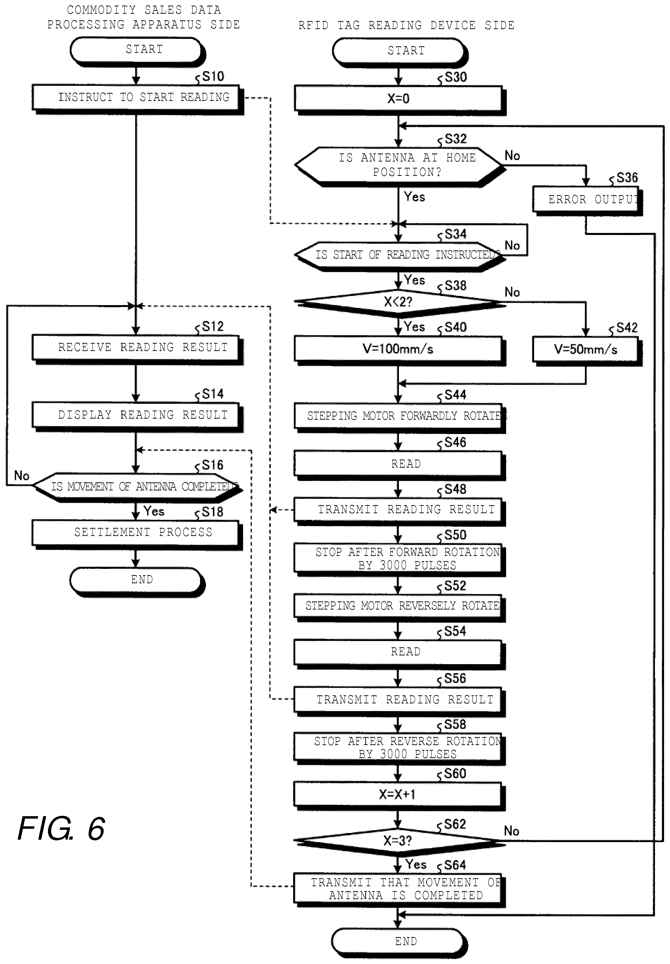

Next, the flow of a series of processes performed by the merchandise sales data processing apparatus 1 and the RFID tag reading device 30 will be described with reference to Fig. 6. Fig. 6 is a flowchart illustrating aspects of a reading process of the RFID tag T that can be performed by the merchandise sales data processing apparatus 1 and the RFID tag reading device 30.

### (Description of aspects of process performed by merchandise sales data processing apparatus)

First, aspects of a process performed by the merchandise sales data processing apparatus 1 will be described. The sales person instructs the input reception unit 102 of the merchandise sales data processing apparatus 1 to start reading the RFID tag T (step S10). Specifically, the sales person places the merchandise M on the checkout counter 10 and instructs to start reading the RFID tag T by operating the keyboard 5 or the button or the like for instructing to start reading the RFID tag T displayed on the sales person-side display 3 provided with the touch panel function.

The communication control unit 106 receives the reading result of the RFID tag T from the RFID tag reading device 30 (step S12).

The display control unit 100 displays the reading result of the RFID tag T on the sales person-side display 3 and the customer-side display 4 (step S14).

The merchandise sales data processing apparatus 1 determines whether or not the movement of the RFID antenna 22 has been completed (step S16). When the merchandise sales data processing apparatus 1 determines that the movement of the RFID antenna 22 has been completed (step S16: Yes), the process proceeds to step S18. Otherwise (step S16: No), the process returns to step S12.

The sales registration unit 104 performs settlement process (step S18). Thereafter, the merchandise sales data processing apparatus 1 ends the process of Fig. 6.

### (Description of aspects of process performed by RFID tag reading device)

Next, the flow of the process performed by the RFID tag reading device 30 will be described. First, the antenna movement control unit 114 sets a counter value X for counting the number of round trips of the RFID antenna 22 to X = 0 (step S30).

With reference to the output of the position sensor 42, the antenna position detection unit 110 determines whether or not the RFID antenna 22 is at a position of x = 0, that is, at a home position (step S32). When the antenna position detection unit 110 determines that the RFID antenna 22 is at the home position (step S32: Yes), the process proceeds to step S34. Otherwise (step S32: No), the process proceeds to step S36.

The RFID tag reading device 30 displays an error output (step S36). The error output may be displayed on, for example, the sales person-side display 3. Thereafter, the process of Fig. 6 is ended.

In step S32, if it is determined that the RFID antenna 22 is at the home position (step S32: Yes), the RFID tag reading device 30 determines whether or not the start of reading of the RFID tag T has been instructed from the merchandise sales data processing apparatus 1 (step S34). If the RFID tag reading device 30 determines that the start of reading of the RFID tag T has been instructed (step S34: Yes), the process proceeds to step S38. Otherwise (step S34: No), the process of step S34 is repeated.

The antenna movement control unit 114 determines whether or not the counter value X is smaller than 2 (step S38).

If the antenna movement control unit 114 determines that the counter value X is smaller than 2 (step S38: Yes), that is, if the RFID antenna 22 has not reciprocated twice, the process proceeds to step S40. Otherwise (step S38: No), the process proceeds to step S42.

The antenna movement speed control unit 116 sets the frequency of the pulse signal applied to the stepping motor 12 to a predetermined value, thereby setting the movement speed of the RFID antenna 22 to V = 100 mm/s (step S40). Thereafter, the process proceeds to step S44.

The antenna movement speed control unit 116 sets the frequency of the pulse signal applied to the stepping motor 12 to a predetermined value, thereby setting the movement speed of the RFID antenna 22 to V = 50 mm/s (step S42). Thereafter, the process proceeds to step S44.

The antenna movement control unit 114 forwardly rotates the stepping motor 12 (step S44).

The reader and writer control unit 112 reads the information of the RFID tag T by receiving the reflected wave of the radio wave radiated by the RFID antenna 22 (step S46).

The communication control unit 118 transmits the information of the RFID tag T read by the reader and writer control unit 112 to the communication control unit 106 of the merchandise sales data processing apparatus 1 (step S48).

After applying 3000 pulses to the stepping motor 12, the antenna movement control unit 114 stops the stepping motor 12 (step S50). The stepping motor 12 moves the moveable stage 20, that is, the RFID antenna 22, from the position of x = 0 to the position of x = W, by applying 3000 pulses. The number 3000 of pulses represents the number of pulses applied to the stepping motor 12 to move the moveable stage 20 from the position of x = 0 to the position of x = W. This number 3000 of pulses is an example and varies depending on the stepping motor 12 being used, the pitch of screws formed on the screw shaft 18, and the like.

The antenna movement control unit 114 reversely rotates the stepping motor 12 (step S52).

The reader and writer control unit 112 reads the information of the RFID tag T by receiving the reflected wave from the RFID antenna 22 (step S54).

The communication control unit 118 transmits the information of the RFID tag T read by the reader and writer control unit 112 to the communication control unit 106 of the merchandise sales data processing apparatus 1 (step S56).

After applying 3000 pulses to the stepping motor 12, the antenna movement control unit 114 stops the stepping motor 12 (step S58). The stepping motor 12 moves the moveable stage 20, that is, the RFID antenna 22, from the position of x = W to the position of x = 0, by applying 3000 pulses.

The antenna movement control unit 114 increments the counter value X (step S60).

The antenna movement control unit 114 determines whether or not the counter value X is 3 (step S62). If the antenna movement control unit 114 determines that the counter value X is 3 (step S62: Yes), that is, if the RFID antenna 22 has reciprocated three times, the process proceeds to step S64. Otherwise (step S62: No), the process returns to step S32.

The RFID tag reading device 30 transmits to the merchandise sales data processing apparatus 1 through the communication control unit 118 that the movement of the RFID antenna 22 has been completed (step S64). Thereafter, the process of Fig. 6 is ended.

### (Description of different speed change pattern of RFID antenna)

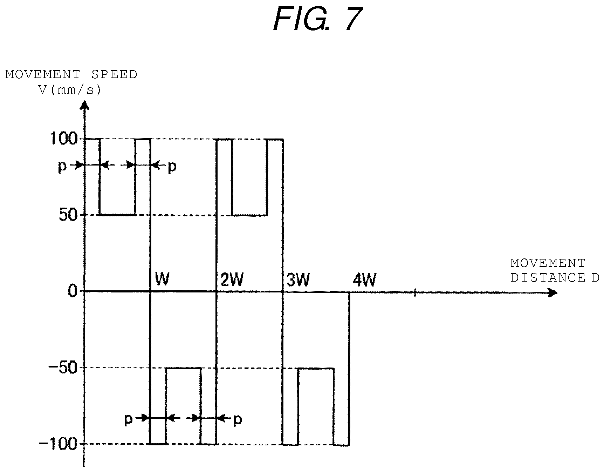

The speed change pattern of the RFID antenna 22 in the RFID tag reading device 30 is not limited to the particular pattern described above. A different speed change pattern of the RFID antenna 22 will be described later with reference to Fig. 7.

In Fig. 7, the movement speed of the RFID antenna 22 is reduced, when the RFID antenna 22 is in the vicinity of the center of the movement range (x = 0 to W). When the items of merchandise M are placed on the top plate of the checkout counter 10, the merchandise items are generally gathered and placed in the vicinity of the center of the movement range of the RFID antenna 22. That is, there is a high likelihood that a plurality of RFID tags T will overlap each other in the vicinity of the center of the movement range of the RFID antenna 22. Therefore, it is possible to more reliably read the tag information from the plurality of overlapping RFID tags T by slowing down the movement speed of the RFID antenna 22 in the vicinity of the center of the movement range of the RFID antenna 22.

According to the speed change pattern of the RFID antenna 22, as illustrated in Fig. 7, the antenna movement speed control unit 116 (Fig. 4) sets the movement speed V of the RFID antenna 22 to V = 50 mm/s in the range of p ≤ D ≤ W-p, within the movement range 0 ≤ D ≤ W of the RFID antenna 22. Here, p is a preset constant. Then, in the other movement range, that is, in the range of 0 ≤ D ≤ p and W - p ≤ D ≤ W, the antenna movement speed control unit 116 sets the movement speed V of the RFID antenna 22 to V = 100 mm/s.

The RFID antenna 22 reads the RFID tags (attached to the items of merchandise M) while moving the predetermined movement range (0 ≤ D ≤ W) over two reciprocating cycles according to the speed change pattern illustrated in Fig. 7.

### (Description of modification of embodiment)

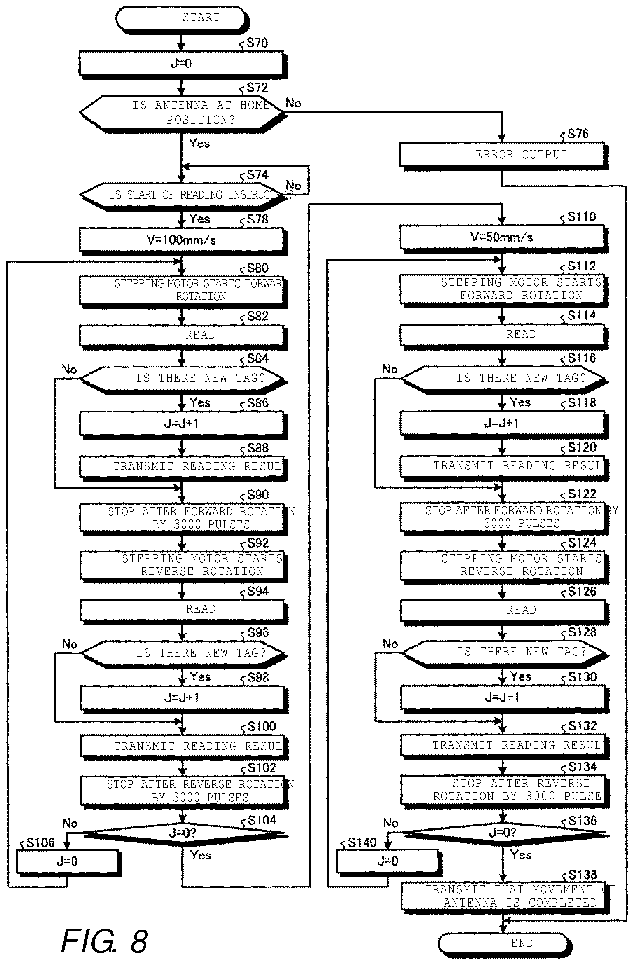

Hereinafter, a modification of the embodiment described above will be described with reference to Fig. 8. According to the configuration of the above-described embodiment, even after reading of all the tag information has been completed, the RFID antenna 22 reciprocate for a predetermined number of times. In a modification described below, the movement speed V of the RFID antenna 22 is lowered when a RFID tags T are detected unread.

Since this modification has substantially the same configuration (e.g., Figs. 3 and 4) as the merchandise sales data processing apparatus 1 provided with the RFID tag reading device 30 described above, a descriptions of the function of each hardware unit is omitted.

Fig. 8 is a flowchart illustrating aspects of a reading process of the RFID tag T performed by the RFID tag reading device 30, in a modification of the merchandise sales data processing apparatus 1 provided with the RFID tag reading device 30. Since the aspects of process performed by the merchandise sales data processing apparatus 1 is substantially the same as illustrated in Fig. 6, only the aspects of the process performed by the RFID tag reading device 30 will be described here.

First, the reader and writer control unit 112 sets a counter value J, indicating the number of RFID tags T read by the RFID antenna 22, to J = 0 (step S70).

With reference to the output of the position sensor 42, the antenna position detection unit 110 determines whether or not the RFID antenna 22 is at a position of x = 0, that is, at the home position (step S72). When the antenna position detection unit 110 determines that the RFID antenna 22 is at the home position (step S72: Yes), the process proceeds to step S74. Otherwise (step S72: No), the process proceeds to step S76.

The RFID tag reading device 30 displays an error output (step S76). The error output may be displayed on, for example, the sales person-side display 3. Thereafter, the process of Fig. 8 is ended.

If, in step S72, the antenna position detection unit 110 determines that the RFID antenna 22 is at the home position (step S72: Yes), the RFID tag reading device 30 determines whether or not the start of reading of the RFID tag T has been instructed from the merchandise sales data processing apparatus 1 (step S74). If the RFID tag reading device 30 determines that the start of reading of the RFID tag T has been instructed (step S74: Yes), the process proceeds to step S78. Otherwise (step S74: No), the process of step S74 is repeated.

The antenna movement speed control unit 116 sets the movement speed of the RFID antenna 22 to V = 100 mm/s (step S78).

The antenna movement control unit 114 forwardly rotates the stepping motor 12 (step S80).

The reader and writer control unit 112 reads the information of the RFID tag T by receiving the reflected wave of the radio wave radiated by the RFID antenna 22 (step S82).

The reader and writer control unit 112 determines whether or not the information of the read RFID tag T is information which has newly been read (step S84). When the information is newly read information (step S84: Yes), the process proceeds to step S86. Otherwise (step S84: No), the process proceeds to step S90.

The reader and writer control unit 112 increments the counter value J (step S86).

The communication control unit 118 transmits the information of the RFID tag T read by the reader and writer control unit 112 to the communication control unit 106 of the merchandise sales data processing apparatus 1 (step S88).

After applying 3000 pulses to the stepping motor 12, the antenna movement control unit 114 stops the stepping motor 12 (step S90). The stepping motor 12 moves the moveable stage 20, that is, the RFID antenna 22, from the position of x = 0 to the position of x = W, by applying 3000 pulses.

The antenna movement control unit 114 reversely rotates the stepping motor 12 (step S92).

The reader and writer control unit 112 reads the information of the RFID tag T by receiving the reflected wave of the radio wave radiated by the RFID antenna 22 (step S94).

The reader and writer control unit 112 determines whether or not the information of the read RFID tag T is newly read information (step S96). When the information is first read information (step S96: Yes), the process proceeds to step S98. Otherwise (step S96: No), the process proceeds to step S100.

The reader and writer control unit 112 increments the counter value J (step S98).

The communication control unit 118 transmits the information of the RFID tag T read by the reader and writer control unit 112 to the communication control unit 106 of the merchandise sales data processing apparatus 1 (step S100).

After applying 3000 pulses to the stepping motor 12, the antenna movement control unit 114 stops the stepping motor 12 (step S102). The stepping motor 12 moves the moveable stage 20, that is, the RFID antenna 22, from the position of x = W to the position of x = 0, by applying 3000 pulses.

The reader and writer control unit 112 determines whether or not the value of the counter value J is 0 (step S104). In a case where the value of the counter value J is 0 (step S104: Yes), the process proceeds to step S110. Otherwise (step S104: No), the process proceeds to step S106.

The reader and writer control unit 112 sets the value of the counter value J to 0 (step S106). Thereafter, the process returns to step S80.

When in step S104, the reader and writer control unit 112 determines that the value of the counter value J is 0 (step S104: Yes), the antenna movement speed control unit 116 sets the movement speed of the RFID antenna 22 to V = 50 mm/s (step S110).

The antenna movement control unit 114 forwardly rotates the stepping motor 12 (step S112).

The reader and writer control unit 112 reads the information of the RFID tag T by receiving the reflected wave of the radio wave radiated by the RFID antenna 22 (step S114).

The reader and writer control unit 112 determines whether or not the information of the read RFID tag T is newly read information (step S116). When the information is newly read information (step S116: Yes), the process proceeds to step S118. Otherwise (step S116: No), the process proceeds to step S122.

The reader and writer control unit 112 increments the counter value J (step S118).

The communication control unit 118 transmits the information (of the RFID tag T) read by the reader and writer control unit 112 to the communication control unit 106 of the merchandise sales data processing apparatus 1 (step S120).

After applying 3000 pulses to the stepping motor 12, the antenna movement control unit 114 stops the stepping motor 12 (step S122). The stepping motor 12 moves the moveable stage 20, that is, the RFID antenna 22, from the position of x = 0 to the position of x = W, by applying 3000 pulses.

The antenna movement control unit 114 reversely rotates the stepping motor 12 (step S124).

The reader and writer control unit 112 reads the information of the RFID tag T by receiving the reflected wave of the radio wave radiated by the RFID antenna 22 (step S126).

The reader and writer control unit 112 determines whether or not the information of the read RFID tag T is newly read information (step S128). When the information is newly read information (step S128: Yes), the process proceeds to step S130. Otherwise (step S128: No), the process proceeds to step S132.

The reader and writer control unit 112 increments the counter value J (step S130).

The communication control unit 118 transmits the information of the RFID tag T read by the reader and writer control unit 112 to the communication control unit 106 of the merchandise sales data processing apparatus 1 (step S132).

After applying 3000 pulses to the stepping motor 12, the antenna movement control unit 114 stops the stepping motor 12 (step S134). The stepping motor 12 moves the moveable stage 20, that is, the RFID antenna 22, from the position of x = W to the position of x = 0, by applying 3000 pulses.

The reader and writer control unit 112 determines whether or not the value of the counter value J is 0 (step S136). In a case where the value of the counter value J is 0 (step S136: Yes), the process proceeds to step S138. Otherwise (step S136: No), the process proceeds to step S140.

The reader and writer control unit 112 sets the value of the counter value J to 0 (step S140). Thereafter, the process returns to step S 112.

In a case where in step S136, the reader and writer control unit 112 determines that the value of the counter value J is 0 (step S136: Yes), the RFID tag reading device 30 transmits to the merchandise sales data processing apparatus 1 through the communication control unit 118 that the movement of the RFID antenna 22 has been completed (step S138). Thereafter, the process of Fig. 8 is ended.

Since the RFID tag reading device 30 reduces the movement speed V of the RFID antenna 22 when new tag information has not be read, it is possible to change the movement speed V of the RFID antenna 22 depending on the reading status of the RFID tag information T, thereby shortening the reading time of the tag information.

### (Description of alternative movement locus of RFID antenna)

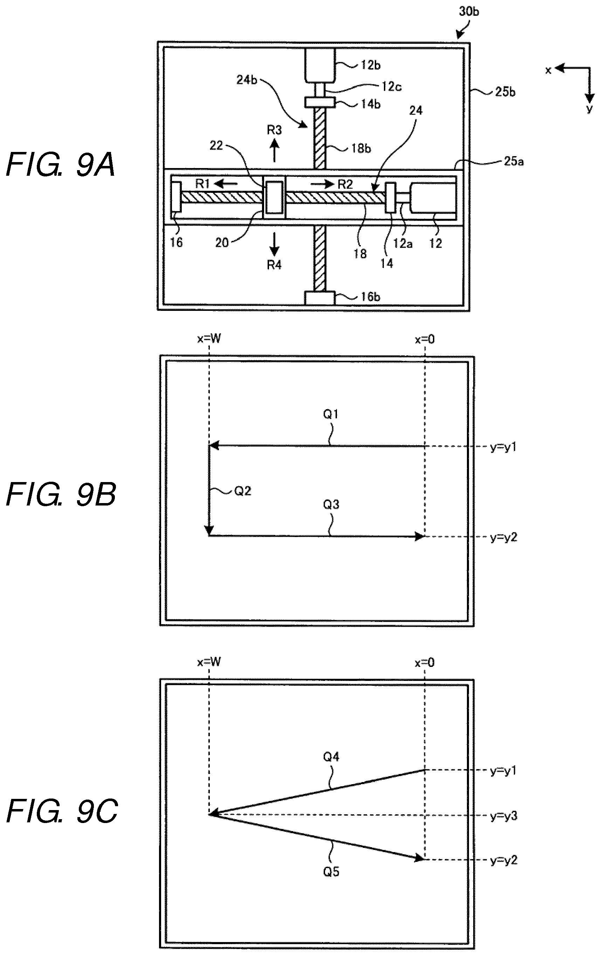

Next, another speed change pattern of the RFID antenna 22 in the RFID tag reading device 30b will be described with reference to Figs. 9.

In the above-described example, the RFID tag reading device 30 moves the RFID antenna 22 along with the moveable stage 20 along the x-axis direction (a one-dimensional path). However, the movement direction of the RFID antenna 22 is not restricted to the x-axis direction. Fig. 9A is a top view illustrating a schematic configuration of an RFID tag reading device 30b, which is a modification of the RFID tag reading device 30. As illustrated in Fig. 9A, the moving mechanism 24 is configured to be movable in the y-axis direction by moving mechanism 24b.

Here, the screw shaft 18, the bearing 16, the stepping motor 12, the coupling 14, and the moveable stage 20 (all of which make up a moving mechanism 24) are supported by a support member 25a. The moveable stage 20 slides while keeping a part of the moveable stage 20 in contact with the support member 25a such that the moveable stage 20 does not rotate as the screw shaft 18 rotates. Thus, the moveable stage 20 moves in the x-axis direction without rotating.

The moving mechanism 24b includes a linear motion mechanism including a screw shaft 18b, a bearing 16b of the screw shaft 18b, a stepping motor 12b having an output shaft 12c as a rotational power source, a coupling 14b that transmits the rotational power of the stepping motor 12b to the screw shaft 18b, a ball screw nut threadedly engaged with the screw shaft 18b, a support member 25a constituting a moving mechanism 24. The support member 25a slides while keeping a part of the support member 25a in contact with the support member 25b such that the support member 25a does not rotate as the screw shaft 18b rotates. Thus, the support member 25a moves in the y-axis direction without rotating.

The RFID antenna 22 is movable along the x-axis (in the directions of the arrow R1 and the arrow R2) by the moving mechanism 24, and is movable along the y-axis direction (in the direction of the arrow R3 and the arrow R4) by the moving mechanism 24b. That is, the RFID antenna 22 is freely movable on the xy plane (i.e., along a two-dimensional path).

With moving mechanisms 24 and 24b, the RFID tag reading device 30b can move the RFID antenna 22 on distinct forward and backward paths.

For example, in the example as illustrated in Fig. 9B, the RFID tag reading device 30b moves the RFID antenna 22 from the position of x = 0 to the position of x = W (movement path Q1) while maintaining y = y1, and thereafter, moves the RFID antenna 22 from the position of y = y1 to the position of y = y2 (movement path Q2) while maintaining x = W. Then, the RFID tag reading device 30b moves the RFID antenna 22 from the position of x = W to the position of x = 0 while keeping y = y 2 (a movement path Q3).

Thereafter, the RFID tag reading device 30b moves the RFID antenna 22 to the original position (x = 0, y = y 1) by moving the moving paths Q3, Q2, and Q1 in the opposite directions.

In this way, since the movement paths of the RFID antenna 22 are different in the forward and backward paths, it is possible to supply radio waves from different directions to the plurality of RFID tags T, thereby improving the probability of reading the tag information of the RFID tags T.

Fig. 9C illustrates a different example of the movement path of the RFID antenna 22. In the example as illustrated in Fig. 9C, the RFID tag reading device 30b moves the RFID antenna 22 simultaneously along two axis directions. That is, the RFID tag reading device 30b moves the RFID antenna 22 from the position of x = 0 and y = y1 to the position of x = W and y = y3 (a movement path Q4), and thereafter, moves the RFID antenna 22 from the position of x = W and y = y3 to the position of x = 0 and y = y2 (a movement path Q5). Thereafter, the RFID tag reading device 30b moves the RFID antenna 22 to the original position (x = 0, y = y1) by moving the moving paths Q5 and Q4 in the opposite directions. By adopting such a movement path, radio waves can be radiated over a wider range within the movement range of the RFID antenna 22.

As described above, according to the RFID tag reading device 30, the reader and writer control unit 112 reads the information of the RFID tag T from the item of merchandise M to which the RFID tag T is attached, while the moving mechanism 24 changes the communication distance between the RFID antenna 22 and the RFID tag T. Furthermore, the antenna movement speed control unit 116 changes the speed of changing the communication distance between the RFID antenna 22 and the RFID tag T. Therefore, it is possible to reliably read the information of the RFID tag T in a short time.

According to the RFID tag reading device 30, the antenna movement speed control unit 116 changes the speed of changing the communication range between the RFID antenna 22 and the RFID tag T, based on at least one of the movement distance of the moving mechanism 24, the position of the communication distance, and the reading result of the reader and writer control unit 112. Therefore, it is possible to reliably read the information of the RFID tag T in a short time.

According to the RFID tag reading device 30, the antenna movement speed control unit 116 reduces the speed of changing the communication range, when in the communication range between the RFID antenna 22 and the RFID tag T, a movement of a predetermined movement distance has been completed. Therefore, even when RFID tags T overlap each other, it is possible to reliably read the information of the RFID tags T, by reducing the movement speed of the RFID antenna 22.

According to the RFID tag reading device 30 of the embodiment, the antenna movement speed control unit 116 reduces the speed of changing the communication range, when the communication range between the RFID antenna 22 and the RFID tag T is in the vicinity of the center of the predetermined movement range. Therefore, since the RFID antenna 22 moves at a low speed at a position where there is a high possibility that a plurality of RFID tags T overlap and are placed, the information of the RFID tag T can be reliably read.

According to the RFID tag reading device 30b t, the antenna movement speed control unit 116) reduces the speed of changing the communication range between the RFID antenna 22 and the RFID tag T, when the reader and writer control unit 112 has not read the information of a new RFID tag T for a predetermined time. Therefore, it is possible to further shorten the time for reading the information of the RFID tag T. Further, since the total movement distance of the RFID antenna 22 can be shortened, the durability of the moving mechanism 24 including the stepping motor 12 can be improved.

Specific examples are described above in which an RFID tag reading device 30, or 30b is applied to a case of reading information stored in RFID tags T attached to items of merchandise M. However, the RFID tag reading device 30, or 30b can also be used as an RFID tag writing device that writes information into the RFID tags T. That is, after tag information is read, the RFID antenna 22 writes information into the RFID tag T indicating that the merchandise has been registered. Such information written to the RFID tags T can be used not only as information indicating that the merchandise is registered but also as information for crime prevention. Even when at least one of the RFID tag reading devices 30 and 30b are used as the RFID tag writing devices, it is possible to reliably write information into the RFID tags T, by making the movement speed of the RFID antenna 22 variable.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope of the inventions.

## Claims

1. An electronic tag reading device, comprising:
an antenna for transmitting wireless signals to an electronic tag to initiate reading of information stored in the electronic tag;
an electronic tag reader electrically coupled to the antenna to supply signals to the antenna and receive signals from the antenna that are used in reading the information stored in the electronic tag;
a moveable stage connected to the antenna and configured to move the antenna during a reading process for reading the information from the electronic tag; and
a speed controller configured to change a speed of the moveable stage during the reading process.

2. The electronic tag reading device according to claim 1, wherein the speed of the moveable stage is based on at least one of a movement distance of the moveable stage, a position of the moveable stage along a movement range of the moveable stage, and a reading result of the electronic tag reader.

3. The electronic tag reading device according to claim 1 or 2, wherein the speed of the moveable stage is reduced when the moveable stage has moved a predetermined movement distance during the reading process.

4. The electronic tag reading device according to any one of claims 1 to 3, wherein the speed of the moveable stage is reduced when the moveable stage traverses a center portion of a predetermined movement range of the moveable stage during the reading process.

5. The electronic tag reading device according to any one of claims 1 to 4, wherein the speed of the moveable stage is reduced when the electronic tag reader fails to read information from an electronic tag during the reading process.

6. The electronic tag reading device according to any one of claims 1 to 5, wherein
the electronic tag is a radio frequency identification (RFID) tag,
the antenna is a planar patch antenna, and
the moveable stage includes a coaxial connector to which the electronic tag reader is connected.

7. The electronic tag reading device according to any one of claims 1 to 6, wherein the moveable stage is configured to move the antenna along a fixed path during the reading process.

8. The electronic tag reading device according to any one of claims 1 to 7, wherein the movement unit is configured to move the antenna along a two-dimensional path during the reading process.

9. The electronic tag reading device according to any one of claims 1 to 8, further comprising:
a checkout counter upon which an item of merchandise, to which the electronic tag has been attached, can be placed, wherein
the antenna and the moveable stage are disposed underneath the checkout counter.

10. The electronic tag reading device according to claim 9, further comprising:
a point-of-sale terminal disposed on the checkout counter and configured to receive electronic tag information from electronic tag reader during a sales registration process.

11. A sales data processing apparatus, comprising:
an electronic tag reading area in which an item of merchandise can be placed;
an electronic tag reading device according to any one of claims 1 to 10; and
a point-of-sale (POS) terminal connected to the electronic tag reader and configured to receive information read from the electronic tag during the reading process.

12. The apparatus according to claim 11, wherein the movement speed of the moveable stage is determined based on at least one of a cumulative movement distance of the moveable stage during the reading process, a position of moveable stage along a movement range of the movement stage, and a reading result of the electronic tag reader during the reading process.

13. The apparatus according to claim 11 or 12, wherein the movement speed of the moveable stage is reduced after the moveable stage has moved for a predetermined movement distance during the reading process.

14. The apparatus according to any one of claims 11 to 13, wherein the movement speed of the moveable stage is reduced when moveable stage traverses a middle portion of a predetermined movement range during the reading process.

15. The apparatus according to any one of claims 11 to 14, wherein the movement speed of the moveable stage is reduced when the electronic tag reader fails to read information from an electronic tag during the reading process.
